# EUROPEAN PATENT SPECIFICATION

(11) **EP 1 589 706 B1**
(45) Date of publication and mention of the grant of the patent: **19.03.2008**
(21) Application number: 04291032.3
(22) Date of filing: 19.04.2004
(51) Int. Cl.: H04L 12/56

(54) **Control of multicast traffic**
Steuerung von Multicast-Verkehr
Commande de trafic de données à multidiffusion

(43) Date of publication of application: 26.10.2005
(73) Proprietor: Alcatel Lucent, 75008 Paris (FR)
(72) Inventor: Pelt, Michiel, 1853 Grimbergen (BE); Miclea, Sorin, 2018 Antwerpen (BE); Borghs, Eric Frans Elisa, 2440 Geel (BE)
(74) Representative: Narmon, Gisèle Marie Thérèse

(56) References cited:
- EP-A- 1 119 134
- EP-A- 1 298 836
- US-B1- 6 654 371
- FENNER W: "RFC 2236 .Internet Group Management Protocol, Version 2" IETF NETWORK WORKING GROUP, 30 November 1997 (1997-11-30), XP002230720

## Description

The present invention relates to control of multicast traffic within a data communication system.

Multicasting is a matter of simultaneously delivering a data stream to a plurality of users.

Multicasting is relying upon multicast routing capabilities, e.g. as embodied by multicast routers, to efficiently forward a multicast data stream throughout a network towards any potential listener, and upon host capabilities to listen to, or transmit, multicast data streams.

Permanent or temporary multicast groups are defined, which hosts can join or leave at their own convenience.

Multicast groups are identified by means of multicast group addresses. A particular multicast group address is assigned to a particular multicast group, permanently or for a limited period of time. A multicast data stream bound to that multicast group makes use of that multicast group address as destination network address, e.g. as destination IP address for an IP-based network.

The Request For Comment (RFC) entitled '*Internet Group Management Protocol, Version 2'* (IGMPv2), ref. 2236, published in November 1997 by the Internet Engineering Task Force (IETF), discloses a method to control multicast traffic.

A host joins, i.e. becomes a member of, a particular multicast group by sending a join message (or membership report) to an immediately neighboring multicast router.

A multicast router that receives, from a particular network interface, a join message for a particular multicast group, starts forwarding traffic related to that multicast group towards that network interface.

A host may decide not to send a join message if there is a host residing on the same local network that is already a member of that multicast group (e.g., by listening to other join messages).

Similarly, a host leaves a particular multicast group by sending a leave message to the multicast router.

A multicast router regularly sends queries to check if hosts are still interested in receiving multicast traffic.

A multicast router that receives, from a particular network interface, a leave message for a particular multicast group, queries members, if any remains, of that multicast group over that network interface. If no response is received within a pre-determined time interval, presently [Group Membership Interval] IGMPv2 time interval, then the multicast router stops transmitting traffic related to that multicast group over that network interface.

The patent application entitled *"Method and Apparatus for Forwarding Multicast Data by Relaying IGMP Group Membership",* ref. US 6654371, discloses a multicast traffic control unit (IGMP-R) for use in a data communication system operable to transmit multicast traffic, and adapted to receive a membership report from a station out of at least one station (IGMP end stations), whereby a membership of a multicast group is notified.

The disclosed multicast traffic control unit unconditionally reports group memberships from the at least one station to the multicast router.

The disclosed multicast traffic control unit is disadvantageous in that multicast traffic can easily jeopardize other traffic types.

It is an object of the present invention to prevent multicast traffic from jeopardizing other traffic types.

This object is achieved due to the fact that said multicast traffic control unit is further adapted to discard reporting of said membership to a multicast router of said data communication system if bandwidth requirement of said multicast group does not fit into a bandwidth that remains available for forwarding multicast traffic towards said at least one station.

By controlling whether a particular group membership is reported to the multicast router, the transmission of traffic related to that multicast group is blocked or enabled over the corresponding network interface of the multicast router.

The multicast traffic control unit may control forwarding of membership reports from the at least one station towards the multicast router (by relaying or dropping membership reports), or may build up its own group membership database (e.g., by querying on its own the at least one station) and, in a further step, may report part or whole of those memberships to the multicast router, as it is disclosed in the cited patent application.

The group memberships that are reported to the multicast router are such that the total amount of multicast traffic which they supposedly induce does not exceed a configurable maximum threshold.

A multicast traffic control unit according to the present invention is advantageous in that the total amount of multicast traffic bound towards the at least one station is upper bound, thereby preventing multicast traffic from monopolizing common network resources at the expense of other traffic types.

For example, the at least one station may consist of data terminal units housed by a single subscriber or a single business organization, or a subset thereof, that are coupled to the data communication network via a shared connection. The maximum threshold may then correspond to a ratio of the total channel capacity available over that shared connection, leaving the remaining capacity available for other traffic types.

An embodiment of a multicast traffic control unit according to the invention is characterized in that said multicast traffic control unit is further adapted, considering that said bandwidth would be exceeded if said membership was reported to said multicast router, to select at least one lower-priority membership out of at least one reported membership, to stop reporting said at least one lower-priority membership to said multicast router, and to report said membership to said multicast router.

This embodiment is advantageous in that priority and/or fairness between concurrent stations and/or concurrent multicast groups can be dealt with, and in that it no longer relies upon group membership chronology.

The algorithm for selecting which group membership and/or station is to preempted by another one, and/or which group membership and/or station is preempting another one, is left for further definition.

For example, a professional computer may be given precedence during working hours over leisure equipment, such as a game console, a television set, a familial desktop, etc.

Still for example, channels from a particular service provider, such as a TV channel provider, may be given precedence over others.

The multicast traffic control unit is positioned along the path between the at least one station and the multicast router, more specifically between the at least one station and the place whereat the membership reports are processed within the multicast router. The multicast traffic control unit is typically positioned at a traffic aggregation point.

An embodiment of a multicast traffic control unit according to the invention is characterized in that said multicast traffic control unit forms part of said multicast router, e.g. a functional or physical unit thereof adapted to intercept the membership reports before they are processed by the multicast router.

Another embodiment of a multicast traffic control unit according to the invention is characterized in that said multicast traffic control unit forms part of an access unit of a data communication network, such as a Digital Subscriber Line Access Multiplexer (DSLAM), an access bridge, etc.

If the access unit further accommodates multicast routing capabilities, the membership reports shall be intercepted too before they are processed by the access unit.

Still Another embodiment of a multicast traffic control unit according to the invention is characterized in that said multicast traffic control unit forms part of a data communication unit for connecting said at least one station to a data communication network, such as a (bridged or routed) modem, a bridge, a router, etc.

Other equipment may accommodate a multicast traffic control unit according to the invention, such as a proxy, a firewall, a Broadband Remote Access Server (BRAS), etc.

The Multicast traffic control unit may also form part of a processing unit coupled to said data communication system, and whereto the multicast control traffic (at least the upstream traffic) from the at least one station is forwarded for further handling, e.g. by means of a Virtual Local Area Network (VLAN), or a label switched path or circuit, or by any other means as known to the person skilled in the art of digital communication.

The present invention also relates to a method for controlling multicast traffic in a data communication system, and comprising the step of receiving a membership report from a station out of at least one station, whereby a membership of a multicast group is notified.

A method according to the invention is characterized in that said method further comprises the step of discarding reporting of said membership to a multicast router of said data communication system if bandwidth requirement of said multicast group does not fit into a bandwidth that remains available for forwarding multicast traffic towards said at least one station.

Embodiments of a method according to the invention correspond with the embodiments of a multicast traffic control unit according to the invention.

The European patent application EP 1119134 A2 discloses a multicast router that controls transmission of multicast streams on a communication link coupling the router to the hosts according to the available bandwidth on the communication link, and that may initiate early termination (preemption) of one or more multicast groups that are pending termination (group specific queries have been issued for these groups) if adequate bandwidth is not available for a newly subscribed group.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 is a functional representation of a data communication system with respect to the invention,
- fig. 2 represents a multicast traffic control unit's data structure,
- fig. 3 represents a multicast traffic control unit's state machine.

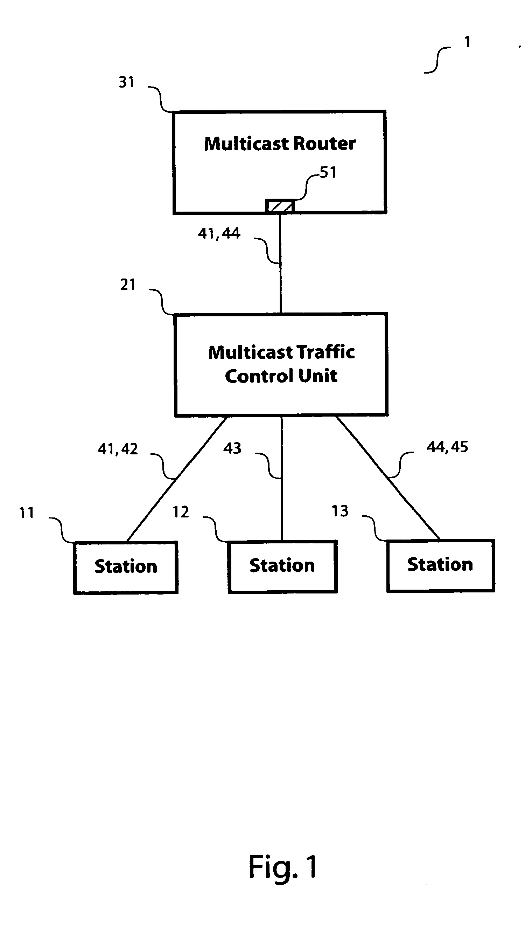

Fig. 1 depicts a data communication system 1 comprising the following functional blocks:
- stations 11 to 13,
- a multicast traffic control unit 21,
- a multicast router 31.

The stations 11 to 13 are coupled via the multicast traffic control unit 21 to a single network interface 51 of the multicast router 31.

In a preferred embodiment of the present invention, the data communication system 1 is IP-based. The stations 11 to 13 report group memberships 41 to 45 to the multicast router 31 by means of IGMPv2. Group membership reports 41 to 45 are either unsolicited messages, or are initiated by general or group-specific queries issued by the multicast router 31 over the network interface 51.

The multicast traffic control unit 21 accommodates the necessary means for intercepting membership reports 41 to 45, e.g. based upon the IGMP protocol value or a multicast class D destination IP address in an IP datagram, or upon a multicast destination MAC addresses in a MAC frame.

The multicast traffic control unit 21 further accommodates the necessary means for relaying part or whole of the membership reports 41 to 45 to the multicast router 31.

The multicast traffic control unit 21 further accommodates storage means for holding locally customer premises equipment-related data and/or subscriber-related data and/or multicast group-related data that are applicable for controlling forwarding of membership reports from the stations 11 to 13 towards the multicast router 31.

Part or whole of those data could be configured by the subscriber, e.g. via a local or remote WEB portal, or via a local man machine interface. Part or whole of those data could be enforced by a service level agreement and/or a subscription profile and/or an operator policy regarding multicast traffic, the applicable information thereof being loaded into the multicast traffic control unit 21 by means of a dedicated control channel, such as Integrated Local Management Interface (ILMI), or from a remote network manager by means of Common Management Information Protocol (CMIP) or Single Network Management Protocol (SNMP), or via Remote Procedure Calls (RPC), or via a local man machine interface.

The multicast traffic control unit 21 holds:
- the maximum amount of multicast traffic that is allowed towards the stations 11, 12 and 13, denoted as Xmax,
- the group membership reporting status and other group-related data.

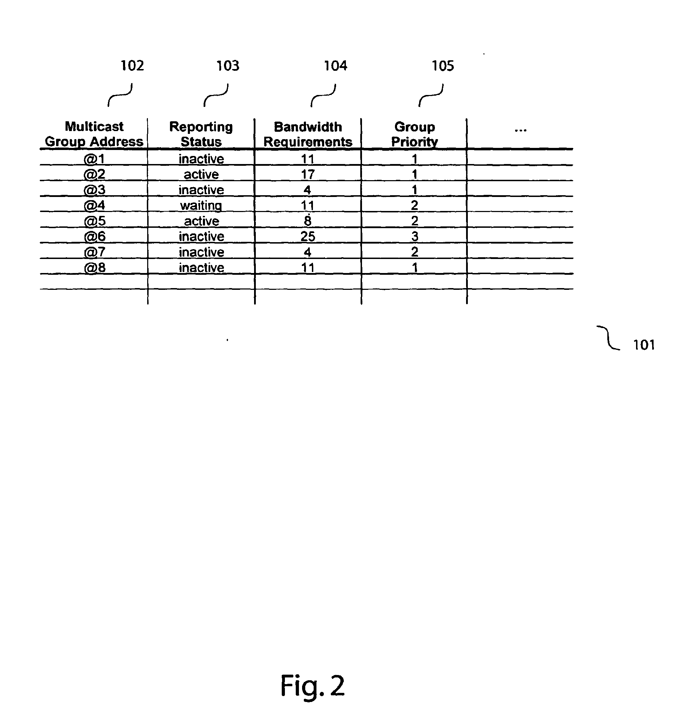

Fig. 2 depicts a data structure 101 for holding the group membership reporting status and other group-related data.

The data structure 101 is row-structured.

Multicast groups are identified in the data structure 101 by means of their multicast group address 102, being a multicast class D IP address or a multicast MAC address, thereby determining the protocol layer at which the amount of multicast traffic is controlled.

The data structure 101 further comprises the group membership reporting status 103, which is defined as:
- 'inactive' when no station is currently an active member of that multicast group,
- 'waiting' when at least one station is currently an active member of that multicast group, yet that membership is not currently reported to the multicast router 31,
- 'active' when at least one station is currently an active member of that multicast group, and that membership is currently reported to the multicast router 31,
- 'checking membership' when a leave message has been received for that multicast group, yet other members, if any, are currently being checked,
- 'preempted' when a leave message has been prematurely sent for that multicast group because of another preempting multicast group.

The data structure 101 further comprises bandwidth requirements 104 of related multicast data streams. In this embodiment, the number of bandwidth units occupied by each applicable multicast data stream, being absolute or relative units, is stored in the database 101.

The data structure 101 further comprises group priorities 105. The lower the figure, the higher the priority.

The multicast traffic control unit 21 makes use of group priorities for selecting which multicast group is to be preempted, and/or which multicast group is preempting. The multicast group priorities are assigned according to a set of rules that relies upon a set of criteria, such as multicast group's identity, multicast group's class of service, etc. The multicast group priorities may also vary over time according to criteria such as the time since which a multicast group has been in 'waiting' or 'active' state, or a day and/or an hour interval, etc.

For instance, precedence may be given to memberships that are pending for a too long time over more recent pending memberships. Conversely, a too old active membership may be prematurely terminated because a higher-priority membership is waiting for the corresponding network resources to be released.

The data structure 101 may further comprise the classes of service, or traffic priorities, of the related multicast data streams, thereby allowing to segregate, and further to control the amount of, multicast traffic on a per class of service, or traffic priority, basis.

The multicast traffic control unit 21 may further store the identities, e.g. the MAC addresses, of the stations that report group memberships, e.g. for giving precedence to a particular terminal or a particular terminal type.

For illustrative purpose, 8 multicast groups, identified by their multicast group address @1 to @8 respectively, have been registered in the data structure 101, together with the respective bandwidth requirements and group priorities.

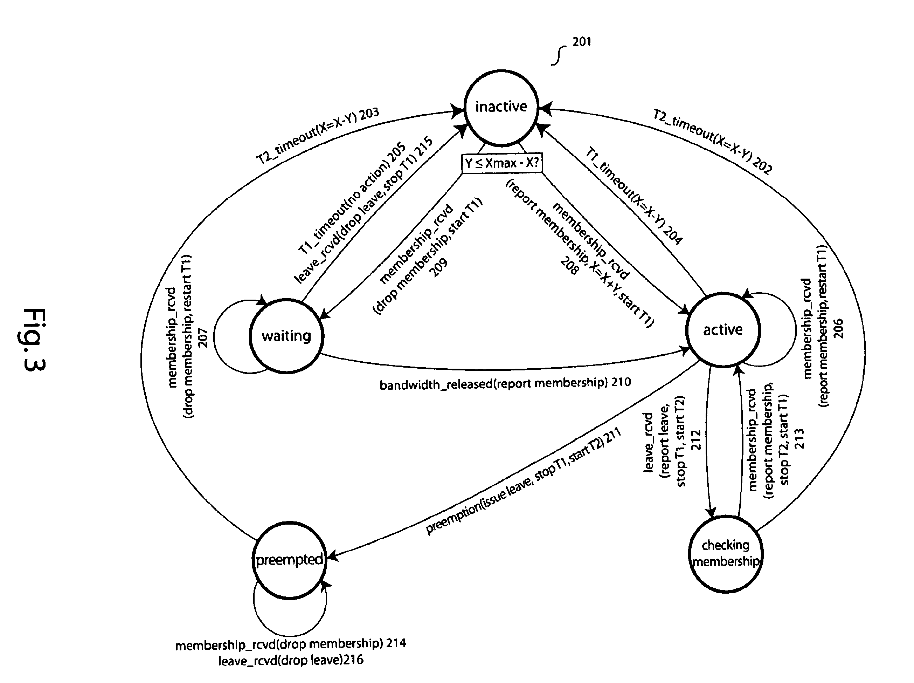

Fig. 3 represents a state machine 201, which the multicast traffic control unit 21 makes use of for determining the group membership status, and further for determining the amount of multicast traffic forwarded by the multicast router 31 via the network interface 51 towards the stations 11 to 13, and further for controlling the membership reporting towards the multicast router 31.

Circles represent group states. Arrows represent state transitions, along with respective events, actions and reference numbers.

The multicast traffic control unit 21 maintains the current total amount of multicast traffic forwarded by the multicast router 31 towards the stations 11 to 13, denoted as X, and compares that amount with the maximum allowed amount Xmax.

The multicast router 31 is assumed to forward traffic for multicast groups that are in 'active' or 'checking membership' or 'preempted' state.

The multicast router 31 is not assumed to forward traffic for multicast groups that are in 'inactive' or 'waiting' state.

The current amount of multicast traffic X is thus obtained by summing up the bandwidth requirements of multicast groups that are in 'active' or 'checking membership' or 'preempted' state.

The multicast traffic control unit 21 may further limit the total number of concurrent multicast data streams, or the number of concurrent multicast data streams of a particular type.

Initially, multicast groups are in 'inactive' state.

Upon receipt of a membership report from a station, whereby a membership of a multicast group is notified, the multicast traffic control unit 21 checks whether the bandwidth requirement Y of that multicast group fits into the bandwidth that remains available for multicast traffic (i.e., checks if Y ≤ Xmax - X). If so, the multicast traffic control unit 21 forwards the membership report to the multicast router 31, updates X to X + Y, and switches that multicast group to 'active' state (208). Else (i.e., Y > Xmax - X), the multicast traffic control unit 21 drops the membership report, and switches that multicast group to 'waiting' state (209).

A timer T1 is started whenever a multicast group enters 'waiting' or 'active' state, and restarted whenever a membership report is received for that multicast group. The membership is considered as being alive as long as T1 does not expire. T1 shall be set at least to [Group Membership Interval] IGMPv2 value. Upon T1 expiry, the multicast router 31 is expected to stop transmission of traffic for that multicast group, X is updated to X - Y, and the multicast group is switched back to 'inactive' state (204 and 205).

While a multicast group is in 'active' state, membership reports for that multicast group keep on being forwarded to the multicast router 31 (206). Upon receipt of a leave message for that multicast group, the multicast traffic control unit 21 forwards the leave message towards the multicast router 31, stops the running timer T1 and starts a new timer T2, and switches that multicast group to 'checking membership' state (212).

The timer T2 shall be set at least to [Last Member Query Count] × [Last Member Query Interval] IGMPv2 value, where [Last Member Query Count] is the number of group-specific queries the multicast router 31 sends for checking membership, if any remains, of that multicast group, and [Last Member Query Interval] is the time interval during which an answer to a single group-specific query is awaited for. If a station reports a membership of that multicast group before T2 expires, the membership report is forwarded towards the multicast router 31, and the multicast group is switched back to 'active' state (213). Else (T2 timeout), X is updated to X - Y and the multicast group is set to 'inactive' state (202).

While a multicast group is in 'waiting' state, membership reports for that multicast group keep on being dropped (207). Upon receipt of a leave message from a station, whereby a membership of that multicast group is terminated, the multicast traffic control unit 21 drops the leave message, stops the running timer T1, and switches the multicast group back to 'inactive' state (215).

While a multicast group is in 'waiting' state, occupied bandwidth can be naturally released on account of other multicast groups that are switched from 'active' or 'checking membership' to 'inactive' state.

The multicast traffic control unit 21 may also decide to preempt one or more lower-priority multicast group, the state of which is 'active', in order to voluntary free up some occupied bandwidth for another waiting multicast group. If so, the multicast traffic control unit 21 issues a leave message towards the multicast router 31, whereby membership to that lower-priority multicast group is terminated, stops the running timer T1, switches that lower-priority multicast group to 'preempted' state, and starts a new timer T2 (211). Any membership report or leave message that may be received while T2 is running is dropped (214 and 216). Upon T2 expiry, the multicast router 31 is expected to stop transmission of traffic for that lower-priority multicast group, X is updated to X - Y, and the lower-priority multicast group is switched back to 'inactive' state (203).

As soon as the current amount of multicast traffic X is such that Xmax - X matches the bandwidth requirements of the waiting multicast group, the multicast traffic control unit 21 issues a membership report towards the multicast router 31, whereby a membership to the waiting multicast group is notified, and switches that multicast group to 'active' state (210). The timer T1 may or may not be restarted. The source address of the membership report may be set to the source address of the station that originally reported that membership.

If more than one waiting multicast groups are competing for the same released bandwidth, then precedence is given to the multicast group, the priority of which is the higher.

In an alternative embodiment of the present invention, the multicast traffic control unit 21 does not account for the multicast groups that are in the 'checking membership' and/or 'preempted' state for determining the current amount of multicast traffic X. If so, the actual amount of multicast traffic forwarded by the multicast router 31 towards the stations 11 to 13 may temporarily exceed the maximum allowed amount Xmax, yet with the advantage that higher priority multicast groups do not need to wait for bandwidth to be actually released.

Yet, it is to be noticed that the current amount of multicast traffic as estimated by the multicast traffic control unit 21 is an approximation of the actual amount of multicast traffic forwarded by the multicast router 31, and that such temporary exceeding could occur every now and then.

In another alternative embodiment of the present invention, the multicast traffic control unit 21 queries the stations 11 to 13, acting as a multicast router vis-a-vis the stations 11 to 13, and answers queries from the multicast router 31, acting as a single host vis-a-vis the multicast router 31.

In still another alternative embodiment, Multicast Listener Discovery (MLD) protocol or another version of IGMP (IGMPv1 or IGMPv3) is used in lieu of IGMPv2. The state machine 201 shall be slightly modified to accommodate the new protocol requirements (e.g., removing support of leave messages for IGMPv1).

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

## Claims

1. A multicast traffic control unit (21) for use in a data communication system (1) operable to transmit multicast traffic, and adapted to receive a membership report (42) from a station (11) out of at least one station (11 to 13) whereby a membership of a multicast group is notified,
**characterized in that** said multicast traffic control unit is further adapted to discard reporting of said membership to a multicast router (31) of said data communication system if bandwidth requirement of said multicast group does not fit into a bandwidth (Xmax - X) that remains available for forwarding multicast traffic towards said at least one station.

2. A multicast traffic control unit according to claim 1
**characterized in that** said multicast traffic control unit is further adapted, considering that said bandwidth would be exceeded if said membership was reported to said multicast router, to select at least one lower-priority membership out of at least one reported membership, to stop reporting said at least one lower-priority membership to said multicast router, and to report said membership to said multicast router.

3. A multicast traffic control unit according to claim 1
**characterized in that** said multicast traffic control unit forms part of said multicast router.

4. A multicast traffic control unit according to claim 1
**characterized in that** said multicast traffic control unit forms part of an access unit of a data communication network.

5. A multicast traffic control unit according to claim 1
**characterized in that** said multicast traffic control unit forms part of a data communication unit for connecting said at least one station to a data communication network.

6. A method for controlling multicast traffic in a data communication system (1), and comprising the step of receiving a membership report (42) from a station (11) out of at least one station (11 to 13) whereby a membership of a multicast group is notified,
**characterized in that** said method further comprises the step of discarding reporting of said membership to a multicast router (31) of said data communication system if bandwidth requirement of said multicast group does not fit into a bandwidth (Xmax - X) that remains available for forwarding multicast traffic towards said at least one station.

## Patentansprüche

1. Multicast-Datenverkehrssteuereinheit (21) zur Verwendung in einem Datenkommunikationssystem (1), die so betrieben werden kann, dass sie Multicast-Datenverkehr sendet und die so angepasst ist, dass sie einen Mitgliedschaftsbericht (42) von einer Station (11) aus mindestens einer Station (11 bis 13) empfängt, wodurch eine Mitgliedschaft einer Multicast-Gruppe benachrichtigt wird,
**dadurch gekennzeichnet, dass** diese Multicast-Datenverkehrssteuereinheit des Weiteren so angepasst ist, dass sie Berichte dieser Mitgliedschaft an einen Multicast-Router (31) dieses Datenkommunikationssystems löscht, wenn Bandbreitenanforderungen dieser Multicast-Gruppe nicht durch die Bandbreite (Xmax - X) abgedeckt werden, die zum Weiterleiten des Multicast-Datenverkehrs an diese mindestens eine Station verfügbar bleibt.

2. Multicast-Datenverkehrssteuereinheit gemäß Anspruch 1,
**dadurch gekennzeichnet, dass** diese Multicast-Datenverkehrssteuereinheit berücksichtigt, dass diese Bandbreite bei einem Melden dieser Mitgliedschaft an den Multicast-Router überschritten würde, und die daher des Weiteren so angepasst ist, dass sie mindestens eine Mitgliedschaft einer niedrigeren Priorität aus der mindestens einen gemeldeten Mitgliedschaft auswählt, um das Melden dieser mindestens einen Mitgliedschaft einer niedrigeren Priorität an diesen Multicast-Router zu stoppen, und dass sie diese Mitgliedschaft an diesen Multicast-Router meldet.

3. Multicast-Datenverkehrssteuereinheit gemäß Anspruch 1,
**dadurch gekennzeichnet, dass** diese Multicast-Datenverkehrssteuereinheit einen Bestandteil dieses Multicast-Routers bildet.

4. Multicast-Datenverkehrssteuereinheit gemäß Anspruch 1,
**dadurch gekennzeichnet, dass** diese Multicast-Datenverkehrssteuereinheit einen Bestandteil einer Zugangseinheit eines Datenkommunikationsnetzwerks bildet.

5. Multicast-Datenverkehrssteuereinheit gemäß Anspruch 1,
**dadurch gekennzeichnet, dass** diese Multicast-Datenverkehrssteuereinheit einen Bestandteil einer Datenkommunikationseinheit zum Verbinden dieser mindestens einen Station mit einem Datenkommunikationsnetzwerk bildet.

6. Verfahren zur Steuerung von Multicast-Datenverkehr in einem Datenkommunikationssystem (1), wobei das Verfahren den Schritt zum Empfangen eines Mitgliedschaftsberichts (42) von einer Station (11) aus mindestens einer Station (11 bis 13) umfasst und wobei eine Mitgliedschaft einer Multicast-Gruppe benachrichtigt wird,
**dadurch gekennzeichnet, dass** dieses Verfahren den Schritt zum Löschen dieser Mitgliedschaft gegenüber einem Multicast-Router (31) dieses Datenkommunikationssystems umfasst, wenn Bandbreitenanforderungen dieser Multicast-Gruppe nicht durch die Bandbreite (Xmax - X) abgedeckt werden, die zum Weiterleiten des Multicast-Datenverkehrs an diese mindestens eine Station verfügbar bleibt.

## Revendications

1. Unité de commande de trafic de multidiffusion (21) à utiliser dans un système de communication de données (1), utilisable pour transmettre un trafic de multidiffusion et adaptée pour recevoir un rapport d'appartenance (42) en provenance d'une station (11) parmi au moins une station (11 à 13) par lequel est notifiée une appartenance d'un groupe de multidiffusion, **caractérisée en ce que** ladite unité de commande de trafic de multidiffusion est en outre adaptée pour rejeter le rapport de ladite appartenance à un routeur de multidiffusion (31) dudit système de communication de données si une condition exigée pour la largeur de bande dudit groupe de multidiffusion ne concorde pas avec une largeur de bande (Xmax - X) qui reste disponible pour réacheminer le trafic de multidiffusion vers ladite au moins une station.

2. Unité de commande de trafic de multidiffusion selon la revendication 1 **caractérisée en ce que** ladite unité de commande de trafic de multidiffusion est en outre adaptée, avec la considération que ladite largeur de bande aurait été dépassée si ladite appartenance avait été rapportée au dit routeur de multidiffusion, afin de sélectionner au moins une appartenance de priorité plus basse parmi au moins une appartenance rapportée, afin d'arrêter le rapport de ladite au moins une appartenance de priorité plus basse au dit routeur de multidiffusion, et pour rapporter ladite appartenance au dit routeur de multidiffusion.

3. Unité de commande de trafic de multidiffusion selon la revendication 1 **caractérisée en ce que** ladite unité de commande de trafic de multidiffusion fait partie dudit routeur de multidiffusion.

4. Unité de commande de trafic de multidiffusion selon la revendication 1 **caractérisée en ce que** ladite unité de commande de trafic de multidiffusion fait partie d'une unité d'accès d'un réseau de communication de données.

5. Unité de commande de trafic de multidiffusion selon la revendication 1 **caractérisée en ce que** ladite unité de commande de trafic de multidiffusion fait partie d'une unité de communication de données afin de connecter ladite au moins une station à un réseau de communication de données.

6. Procédé de commande d'un trafic de multidiffusion dans un système de communication de données (1), comprenant l'étape consistant à recevoir un rapport d'appartenance (42) en provenance d'une station (11) parmi au moins une station (11 à 13) par lequel est notifiée une appartenance d'un groupe de multidiffusion,
**caractérisé en ce que** ledit procédé comprend en outre l'étape de rejeter le rapport de ladite appartenance à un routeur de multidiffusion (31) dudit système de communication de données si la condition exigée pour la largeur de bande dudit groupe de multidiffusion ne concorde pas avec une largeur de bande (Xmax - X) qui reste disponible pour réacheminer le trafic de multidiffusion vers ladite au moins une station.
